# EUROPÄISCHE PATENTSCHRIFT

(11) **EP 3 408 057 B1**
(45) Veröffentlichungstag und Bekanntmachung des Hinweises auf die Patenterteilung: **09.10.2019**
(21) Anmeldenummer: 17701134.3
(22) Anmeldetag: 24.01.2017
(51) Int. Cl.: B25D 16/00, B25F 5/00, B23Q 11/00, B23Q 11/04

(54) **HANDWERKZEUGMASCHINE**
HANDHELD MACHINE TOOL
MACHINE-OUTIL PORTATIVE

(30) Priorität: 29.01.2016 EP 16153432
(43) Veröffentlichungstag der Anmeldung: 05.12.2018
(73) Patentinhaber: Hilti Aktiengesellschaft, 9494 Schaan (LI)
(72) Erfinder: SCHAER, Roland, 9472 Grabs (CH)
(74) Vertreter: Hilti Aktiengesellschaft Corporate Intellectual Property
(86) Internationale Anmeldenummer: PCT/EP2017/051364
(87) Internationale Veröffentlichungsnummer: WO 2017/129538

(56) Entgegenhaltungen:
- EP-A1- 0 666 148
- EP-A2- 0 771 619
- EP-A2- 1 201 373
- US-A1- 2007 008 162
- US-A1- 2007 084 613
- US-A1- 2014 166 323

## Beschreibung

Die vorliegende Erfindung betrifft eine Handwerkzeugmaschine wie aus der EP 0666148 B1 bekannt.

Bei dem Arbeiten mit einem Bohrhammer kann der Bohrer im Mauerwerk klemmen. Das rückwirkende Drehmoment bewirkt ein Verdrehen des Bohrhammers gegen die Haltekraft des Anwenders. Falls der Bohrer plötzlich klemmt, wird der Anwender überrascht und der Anwender kann aufgrund des hohen auftretenden Drehmoments verletzt werden. Ein Drehen des Bohrhammers oder dessen Handgriffs wird daher mit einer potentiell gefährdenden Situation assoziiert und der Bohrhammer abgeschaltet. Allerdings dreht der Anwender auch absichtlich den Bohrhammer, beispielsweise für eine angenehmere Halteposition, während des Betriebs. Ein Abschalten darf hierbei nicht auftreten.

Aus der EP 0 666 148 B1 ist ein Steuerungsverfahren einer Werkzeugmaschine für rotierende Werkzeuge bekannt, mit den Schritten:
Kontinuierliches Drehen eines Werkzeughalters mittels eines Drehantriebs um eine Arbeitsachse ansprechend auf ein Betätigen eines Betriebstasters,
Erfassen einer Drehbewegung eines Handgriffs um die Arbeitsachse mittels eines Bewegungssensors,
Schätzen eines ersten Drehwinkels des Handgriffs mittels eines ersten Bewegungsschätzers, welcher langsame Drehbewegungen unterhalb eines ersten Grenzwertes und schnellere Drehbewegungen oberhalb eines zweiten Grenzwertes ausblendet,
Schätzen eines zweiten Drehwinkels des Handgriffs mittels eines zweiten Bewegungsschätzers, welcher langsame Drehbewegungen unterhalb des Grenzwertes berücksichtigt,
Aktivieren einer Schutzmaßnahme zum Reduzieren der Drehmomentabgabe des Drehantriebs, wenn der erste Drehwinkel eine erste Auslöseschwelle überschreitet.

### OFFENBARUNG DER ERFINDUNG

Ein erfindungsgemäßes Steuerungsverfahren einer Werkzeugmaschine für rotierende Werkzeuge sieht folgende Schritte vor. Ein Werkzeughalters wird mittels eines Drehantriebs ansprechend auf ein Betätigen eines Betriebstasters kontinuierlich um eine Arbeitsachse gedreht. Eine Drehbewegung eines Handgriffs um die Arbeitsachse wird mittels eines Bewegungssensors erfasst. Ein erster Drehwinkel (28) des Handgriffs wird mittels eines ersten Bewegungsschätzers geschätzt, wobei langsame Drehbewegungen unterhalb eines Grenzwertes ausblendet werden. Ein zweiter Drehwinkel (32) des Handgriffs wird mittels eines zweiten Bewegungsschätzers geschätzt, wobei langsame Drehbewegungen unterhalb des Grenzwertes berücksichtigt werden. Eine Schutzmaßnahme zum Reduzieren der Drehmomentabgabe des Drehantriebs wird aktiviert, wenn der erste Drehwinkel eine erste Auslöseschwelle A1 überschreitet. Die Schutzmaßnahme zum Reduzieren der Drehmomentabgabe des Drehantriebs wird aktiviert, wenn der zweite Drehwinkel eine zweite Auslöseschwelle A2 überschreitet und zugleich eine Leistungsabgabe des Drehantriebs eine Leistungsschwelle L überschreitet.

Der Steuerungsverfahren schaltet bei schnellen, unkontrollierbaren Drehbewegungen die Schutzmaßnahme ein. Bei Drehbewegungen, welche vielleicht kontrolliert erfolgen, prüft das Steuerungsverfahren als Zweikriterium die Leistungsaufnahme oder dem gleichwertig das anliegende Drehmoment. Ein Indiz für eine unkontrollierte, langsame Drehbewegung eignet sich die Leistungsaufnahme als Unterscheidungskriterium.

Eine Ausgestaltung sieht vor, dass der Grenzwert im Bereich zwischen 10 Grad/s und 50 Grad/s liegt.

Eine besondere Ausgestaltung sieht vor, dass das Schätzen eines ersten Drehwinkels (28) des Handgriffs mittels des ersten Bewegungsschätzers langsame Drehbewegungen unterhalb eines ersten Grenzwertes ausblendet, das Schätzen eines zweiten Drehwinkels (32) des Handgriffs mittels des zweiten Bewegungsschätzers langsame Drehbewegungen unterhalb eines zweiten Grenzwertes berücksichtigt, wobei der zweite Grenzwert geringer als 10% des ersten Grenzwertes ist. Die beiden Grenzwerte sind vorzugsweise deutlich verschieden.

Der erste Bewegungsschätzer kann durch einen bandbegrenzten Integrator mit einer ersten Grenzfrequenz w1 und der zweite Bewegungsschätzer durch einen bandbegrenzten Integrator mit einer zweiten Grenzfrequenz w2 realisiert werden. Die erste Grenzfrequenz w1 ist wenigstens zehnmal größer als die zweite Grenzfrequenz w2.

Die erste Auslöseschwelle A1 kann geringer als die zweite Auslöseschwelle A2 sein. Vorzugsweise werden bei schnellen Drehbewegungen nur geringe Drehwinkel zugelassen, da mit diesen ein höheres Verletzungsrisiko einhergeht. Die langsamen Drehbewegungen können gewollt sein, von daher ist ein möglichst spätes Eingreifen von Interesse.

Steuerungsverfahren nach Anspruch 5, dadurch kennzeichnet, dass die erste Auslöseschwelle A1 geringer als 50 Grad und die zweite Auslöseschwelle A2 größer als 90 Grad ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer

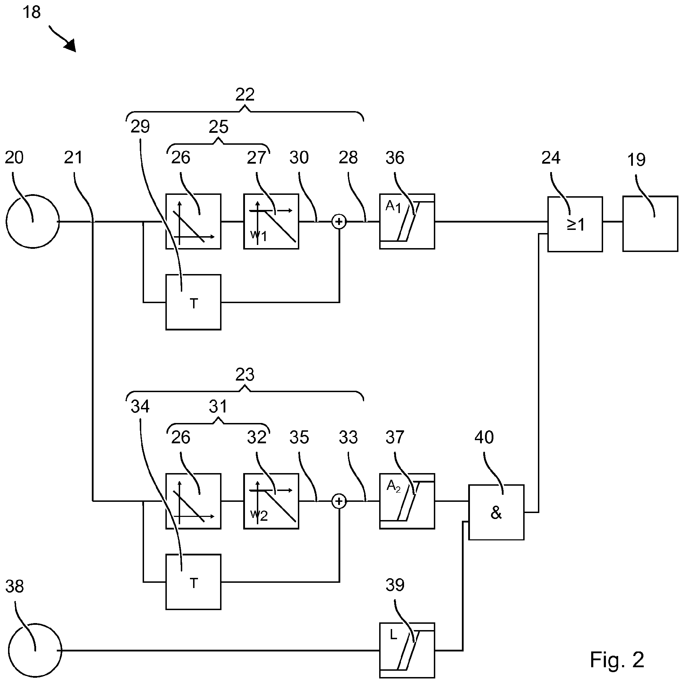

- Fig. 2: eine Schutzeinrichtung

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

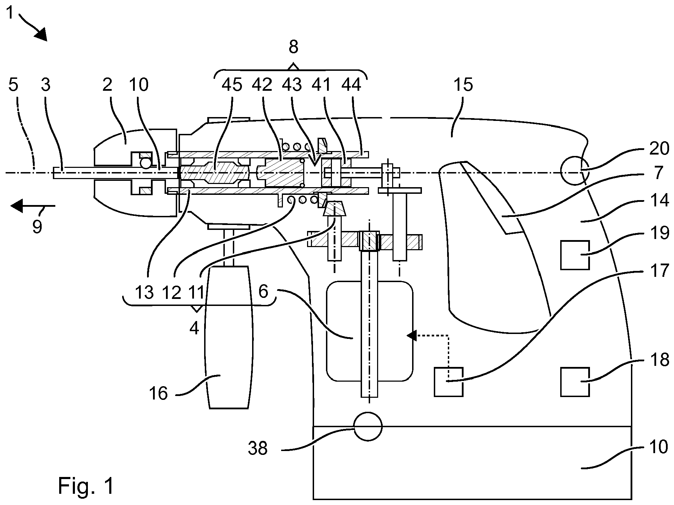

Fig. 1 zeigt als Beispiel einer handgeführten Werkzeugmaschine schematisch einen Bohrhammer **1.** Der Bohrhammer **1** hat einen Werkzeughalter **2,** in welchen ein Bohrer **3** oder anderes Werkzeug eingesetzt und verriegelt werden kann. Der beispielhafte Bohrhammer **1** hat einen Drehantrieb **4,** welcher den Werkzeughalter **2** um dessen Arbeitsachse **5** drehend antreibt. Der Drehantrieb **4** basiert auf einem Elektromotor **6,** den der Anwender über einen Betriebstaster **7** ein- und ausschalten kann. Ein zusätzliches Schlagwerk **8** kann periodisch in einer Schlagrichtung **9,** längs der Arbeitsachse **5** auf den Bohrer **3** schlagen. Das Schlagwerk **8** ist vorzugsweise von dem gleichen Elektromotor **6** angetrieben. Eine Stromversorgung kann über eine Batterie **10** oder eine Netzleitung erfolgen.

Der Drehantrieb **4** beinhaltet den Elektromotor **6.** Der Elektromotor **6** ist mit dem Werkzeughalter **2** über einen Antriebsstrang gekoppelt. Der Antriebsstrang hat beispielsweise ein untersetzendes Getriebe **11.** Ferner kann eine Kupplung **12** vorgesehen sein. Eine Welle **13,** beispielsweise eine hohle Welle, koppelt den Drehantrieb **4** an den Werkzeughalter **2.**

Der Bohrhammer **1** hat einen Handgriff **14,** der typischerweise an einem dem Werkzeughalter **2** abgewandten Ende eines Maschinengehäuses **15** des Bohrhammers **1** befestigt ist. Ein zusätzlicher Handgriff **16** kann beispielsweise nahe des Werkzeughalters **2** befestigt werden. Der Anwender kann den Bohrhammer **1** mit dem Handgriff **14** während des Bohrens führen und halten.

Der Anwender kann den Drehantrieb **4** mit dem Betriebstaster **7** ein- und ausschalten. Der beispielhafte Betriebstaster **7** hat eine deaktivierende Schaltstellung und eine oder mehrere aktivierende Schaltstellungen. Vorzugsweise ist der Betriebstaster **7** monostabil in der deaktivierenden Schaltstellung. Der Anwender muss den Betriebstaster **7** gedrückt halten, ansonsten schaltet sich der Drehantrieb **4** ab. Der Anwender kann beispielsweise durch Wahl seiner Betätigungskraft eine der aktivierenden Schaltstellungen auswählen. Die verschiedenen Schaltstellungen können mit unterschiedlichen Drehzahlen oder unterschiedlichem Drehmoment des Drehantriebs **4** assoziiert sein.

Eine Motorsteuerung **17** wird bei Betätigen des Betriebstasters **7** geweckt. Die Motorsteuerung **17** kontrolliert die Drehrichtung des Elektromotors **6.** Die Motorsteuerung **17** speist entsprechend der Vorwärtsrichtung einen Strom phasenrichtig in die Wicklungen des Elektromotors **6** ein. Die Vorwärtsrichtung ist bei einem Bohrhammer **1** unveränderlich als in rechtslaufend vorgegeben. Bei einem Elektroschrauber ist die Vorwärtsrichtung für den Betrieb typischerweise durch einen Wahlschalter einstellbar.

Die Motorsteuerung **17** kontrolliert die Drehzahl des Elektromotors **6.** Die Motorsteuerung **17** steuert die Leistungsaufnahme des Elektromotors **6** auf einen Sollwert, wodurch sich eine durch die Last vorgegebene Drehzahl einstellt. Die Motorsteuerung **17** gibt beispielsweise einen mittleren Strom mittels einer Pulsweitenmodulation vor. Die Motorsteuerung **17** kann die Leistungsaufnahme derart anpassen, dass sich eine konstante Drehzahl einstellt. Die Begrenzung der Leistungsaufnahme oder die Drehzahl kann beispielsweise durch den Anwender und die Stärke der Betätigung des Betriebstasters **7** vorgegeben werden.

Ansprechend auf das Betätigen des Betriebstasters **7** dreht sich der Drehantrieb **4,** typischerweise in einem Rechtslauf. Die rechtsläufige Drehrichtung hat sich als Standard zum Bohren und zum Setzen von Schrauben etabliert. Während des Bohrens wirkt auf den Anwender typischerweise ein geringes rückwirkendes Drehmoment ein, welches aus dem Widerstand von Gestein gegenüber dem drehenden Bohrer **3** resultiert. Der Anwender kann die notwendige Haltekraft mühelos oder mit geringer Anstrengung aufbringen. Der Bohrer **3** kann in dem Bohrloch blockieren, wodurch in Folge des sich weiterhin drehenden Drehantriebs **4** ein hohes Drehmoment auf den Werkzeughalter **2** ausgeübt wird. Das rückwirkende Drehmoment kann dabei ruckartig ansteigen und in Folge den Anwender und den Bohrhammer **1** schädigen. Um einer Verletzung des Anwenders und einer Beschädigung des Bohrhammers **1** vorzubeugen überwacht eine Schutzeinrichtung **18** das Verhalten des Bohrhammers **1** und veranlasst bei einer zu erwartenden oder eingetretenen Blockade eine Schutzmaßnahme **19,** welche den durch den Betriebstaster **7** vorgegebenen Betrieb des Bohrhammers **1** unterbricht.

Die Schutzeinrichtung **18** beinhaltet einen Bewegungssensor **20.** Der Bewegungssensor **20** liegt vorzugsweise auf der Arbeitsachse **5.** Der Bewegungssensor **20** kann beispielsweise an oder nahe dem Handgriff **16** angeordnet sein. Der Bewegungssensor **20** erfasst eine Drehbewegung des Handgriffs **14** um die Arbeitsachse **5.** Ein beispielhafter Bewegungssensor **20** ist ein Gyrosensor, welcher unmittelbar eine Winkelgeschwindigkeit basierend auf einer durch die Drehbewegung ausgeübte Corioliskraft ermittelt. Der Gryrosensor kann beispielsweise ein schwingendes Plättchen enthalten, dessen Schwingungsfrequenz durch die Corioliskraft verändert wird. Ein alternativer Bewegungssensor **20** erfasst eine Beschleunigung an zwei versetzten Orten in dem Bohrhammer **1** und ermittelt aus der Differenz die Drehbewegung des Bohrhammers **1.**

Ein Ausgangssignal **21** des Bewegungssensors **20** ist ein Maß für die Drehgeschwindigkeit **w** oder Winkelgeschwindigkeit des Handgriffs **14** um die Arbeitsachse **5.** Das Ausgangssignal **21** wird einem ersten Bewegungsschätzer **22** für schnelle Drehbewegungen und einem zweiten Bewegungsschätzer **23** für langsame Drehbewegungen zugeführt. Die Schutzmaßnahme **19** kann unabhängig von dem ersten Bewegungsschätzer **22** und von dem zweiten Bewegungsschätzer **23** ausgelöst werden, wie symbolisch durch das logische ODER-Gatter **24** dargestellt.

Der erste Bewegungsschätzer **22** beinhaltet einen (ersten) bandbegrenzten Integrator **25.** Der bandbegrenzte Integrator **25** hat eine (erste) Grenzfrequenz **w1** im Bereich zwischen 300 mHz und 1000 mHz. Die geringe Grenzfrequenz **w1** unterdrückt langsame Drehbewegungen des Handgriffs **14,** welche typischerweise durch den Anwender initiiert werden. Schnelle Drehbewegungen, welche typischerweise nicht von einem Anwender ausgelöst sondern auf eine Blockade des Bohrers **3** hinweisen, werden integriert. Typischerweise sind Winkelgeschwindigkeiten des Handgriffs **14** in der Größenordnung der Drehzahl der Werkzeugaufnahme durch eine Blockade verursacht. Die typischen Drehzahlen liegen im Bereich zwischen 2 Hz und 20 Hz, die zugehörig betrachteten Winkelgeschwindigkeiten bei einer Blockade liegen beispielsweise im Bereich von 500 Grad/s bis 5'000 Grad/s.

Der bandbegrenzte Integrator 25 ist durch einen unbegrenzten Integrator **26** und einen Hochpassfilter **27** symbolisch dargestellt. Die Grenzfrequenz **w1** des Hochpassfilter **27** entspricht der Grenzfrequenz **w1** des bandbegrenzten Integrators **25.** Die Grenzfrequenz **w1** bezeichnet die Frequenz, bei welcher das Ausgangssignal **21** des Hochpassfilters **27** um 3dB gedämpft wird. Der bandbegrenzte Integrator **25** kann digital oder analog realisiert werden. Gegebenenfalls wird das Ausgangssignal **21** des Bewegungssensors **20** zeitdiskret abgetastet. Ein digitaler Integrator **25** kann mittels einer diskreten Schaltung oder als Routine in einem Mikroprozessor realisiert werden.

Das (erste) Ausgangssignal **28** des ersten Bewegungsschätzers **22** ist eine Schätzung des Drehwinkels, um welchen sich der Bohrhammer **1** oder der Handgriff **16** innerhalb einer kurzen zurückliegenden Zeitspanne gedreht hat. Die Grenzfrequenz **w1** limitiert die betrachtete Zeitspanne oder gewichtet Drehbewegungen außerhalb der Zeitspanne mit sehr kleinen Faktoren.

Der beispielhafte erste Bewegungsschätzer **22** hat einen zusätzlichen Proportionalanteil **29,** welcher die aktuelle Winkelgeschwindigkeit mit einer festen Zeitkonstante **T** multipliziert. Mittels des Proportionalanteils **29** wird geschätzt, wie weit sich der Handgriff **16** innerhalb einer zukünftigen Zeitspanne weiterdrehen wird. Der Proportionalanteil **29** und das Ausgangssignal **30** des bandbegrenzten Integrators **25** werden zu dem Ausgangssignal **28** des ersten Bewegungsschätzers **22** addiert.

Der zweite Bewegungsschätzer **23** beinhaltet einen (zweiten) bandbegrenzten Integrator **31.** Der Aufbau des zweiten bandbegrenzten Integrators **31** ist gleich dem Aufbau des ersten bandbegrenzten Integrators **25.** Eine (zweite) Grenzfrequenz **w2** des Integrators **31** ist derart gewählt, dass der zweite Bewegungsschätzer **23** Drehbewegungen mit einer unteren Winkelgeschwindigkeit von 20 Grad/s integriert. Die zweite Grenzfrequenz **w2,** ist vorzugsweise höchstens 1/10, vorzugsweise höchstens 1/100 der ersten Grenzfrequenz **w1.** Vorzugsweise liegt die zweite Grenzfrequenz **w2** im Bereich zwischen 2 mHz und 10 mHz. Die Verstärkung des ersten bandbegrenzten Integrators **25** und des zweiten bandbegrenzten Integrators **31** ist oberhalb der zweiten Grenzfrequenz **w2** vorzugsweise gleich. Eine Grenzfrequenz **w2** des Hochpassfilters **32** entspricht der zweiten Grenzfrequenz **w2.**

Das (zweite) Ausgangssignal **33** des zweiten Bewegungsschätzers **23** in eine Schätzung des Drehwinkels, um welchen sich der Bohrhammer **1** oder der Handgriff **16** um die Arbeitsachse **5** gedreht hat. Der zweite Bewegungsschätzer **23** berücksichtigt auch langsame Drehbewegungen. Hierdurch werden auch weiter in der Vergangenheit zurückliegende Drehbewegungen signifikant berücksichtigt.

Der zweite Bewegungsschätzer **23** kann ebenfalls einen Proportionalanteil **34** aufweisen, der vorzugsweise identisch zu dem Proportionalanteil **29** des ersten Bewegungsschätzers **22** ist, insbesondere mit der gleichen Zeitkonstante **T.** Das Ausgangssignal **33** des zweiten Bewegungsschätzers **23** basiert auf der Summe des Ausgangsignals **35** des zweiten bandbegrenzten Integrators **31** und des Proportionalanteils **34.**

Die Schutzeinrichtung **18** hat eine erste Auslöseschwelle **A1,** beispielsweise durch einen (ersten) Diskriminator **36** realisiert, mit welchem das Ausgangssignal **28** des ersten Bewegungsschätzers **22** verglichen wird. Überschreitet das Ausgangssignal **28** die Auslöseschwelle **A1** wird die Schutzmaßnahme **19** eingeleitet. Die erste Auslöseschwelle **A1** entspricht einem Drehwinkel von höchstens 50 Grad, vorzugsweise mindestens 10 Grad. Die Schutzeinrichtung **18** wird aktiviert, wenn der erste Bewegungsschätzer **22** eine gemittelte Drehung von mehr als 50 Grad erfasst hat oder innerhalb der Zeitspanne eine Drehung von mehr als 50 Grad erwartet.

Die Schutzeinrichtung **18** hat eine zweite Auslöseschwelle **A2,** beispielsweise durch einen (zweiten) Diskriminator **37** realisiert, mit welchem das zweite Ausgangssignal **33** des zweiten Bewegungsschätzers **23** verglichen wird. Die zweite Auslöseschwelle **A2** entspricht einem Drehwinkel zwischen 90 Grad und 120 Grad. Die zweite Auslöseschwelle **A2** ist größer als die erste Auslöseschwelle. Das Verdrehen des Handgriffs **14** erfolgt mit einer Winkelgeschwindigkeit, welche dem Anwender ein Reagieren ermöglicht. Die Zeitspanne innerhalb der der Handgriff **16** um einen Drehwinkel von 50 Grad gedreht wird, ist größer als die typische Reaktionszeit des Menschen von 200 ms bis 400 ms.

Das Überschreiten der zweiten Auslöseschwelle **A2** ist nur eine Bedingung für das Einleiten der Schutzmaßnahme **19.** Die zweite Bedingung ist das Überschreiten einer Leistungsschwelle durch die Leistungsabgabe des Drehantriebs **4.**

Die Leistungsabgabe wird durch einen Leistungssensor **38** erfasst. Die Leistungsabgabe kann beispielsweise mittelbar durch die Leistungsaufnahme des Elektromotors **6** bestimmt werden. Ferner kann die Leistungsabgabe basierend auf dem von dem Drehantrieb **4** ausgeübten Drehmoment und dessen Drehzahl bestimmt werden. Die Leistungsschwelle **L** liegt beispielsweise oberhalb von 200 Watt. Ein Diskriminator **39** vergleicht die aktuelle Leistungsabgabe mit der Leistungsschwelle **L.** Die Schutzmaßnahme **19** wird ausgelöst, wenn sowohl die erste Bedingung als auch die zweite Bedingung erfüllt sind, symbolisch durch das UND-Gatter **40** dargestellt.

Die Schutzmaßnahme **19** kann ein mechanisches Unterbrechen des Drehantriebs **4** mittels der Kupplung **12** beinhalten. Die Kupplung **12** ist entsprechend über einen Aktor schaltbar, z.B. über eine Magnetspule. Alternativ oder zusätzlich kann der Elektromotor **6** gebremst werden. Das Bremsen eines Elektromotors **6** erfolgt beispielsweise über ein Kurzschließen der Rotorwicklungen oder Kurzschließen der Statorwicklungen über einen Lastwiderstand. Das Bremsen des Elektromotors **6** kann durch eine Motorsteuerung **17** kontrolliert werden.

Das Schlagwerk **8** ist beispielsweise ein pneumatisches Schlagwerk. Ein Erregerkolben **41** wird durch den Elektromotor **6** in eine periodische Vor- und Zurückbewegung längs der Arbeitsachse **5** gezwungen. Ein auf der Arbeitsachse **5** laufender Schläger **42** ist über eine Luftfeder an den Erregerkolben **41** angekoppelt. Die Luftfeder ist durch eine von dem Erregerkolben **41** und dem Schläger **42** abgeschlossene pneumatische Kammer **43** gebildet. Der Erregerkolben **41** und der Schläger **42** können in einem Führungsrohr **44** geführt sein, welches zugleich die pneumatische Kammer **43** in radialer Richtung abschließt. Ein Döpper **45** kann in Schlagrichtung **9** von dem Schläger **42** angeordnet sein. Der Schläger **42** schlägt auf den Döpper **45,** welcher den Schlag auf den in dem Werkzeughalter **2** liegenden Bohrer **3** weiterleitet.

## Patentansprüche

1. Steuerungsverfahren einer Werkzeugmaschine (1) für rotierende Werkzeuge mit den Schritten:
kontinuierliches Drehen eines Werkzeughalters (2) mittels eines Drehantriebs (4) um eine Arbeitsachse (5) ansprechend auf ein Betätigen eines Betriebstasters (7),
Erfassen einer Drehbewegung eines Handgriffs (14) um die Arbeitsachse (5) mittels eines Bewegungssensors (20),
Schätzen eines ersten Drehwinkels (28) des Handgriffs (14) mittels eines ersten Bewegungsschätzers (22), welcher langsame Drehbewegungen unterhalb eines Grenzwertes ausblendet,
Schätzen eines zweiten Drehwinkels (32) des Handgriffs (14) mittels eines zweiten Bewegungsschätzers (23), welcher langsame Drehbewegungen unterhalb des Grenzwertes berücksichtigt,
Aktivieren einer Schutzmaßnahme (19) zum Reduzieren der Drehmomentabgabe des Drehantriebs (4), wenn der erste Drehwinkel (28) eine erste Auslöseschwelle (A1) überschreitet,
Aktivieren der Schutzmaßnahme (19) zum Reduzieren der Drehmomentabgabe des Drehantriebs (4), wenn der zweite Drehwinkel (33) eine zweite Auslöseschwelle (A2) überschreitet und zugleich eine Leistungsabgabe des Drehantriebs (4) eine Leistungsschwelle (L) überschreitet.

2. Steuerungsverfahren nach Anspruch 1, **dadurch kennzeichnet, dass** der Grenzwert im Bereich zwischen 10 Grad/s und 50 Grad/s liegt.

3. Steuerungsverfahren nach Anspruch 1 oder 2, **dadurch kennzeichnet, dass** das Schätzen eines ersten Drehwinkels (28) des Handgriffs (14) mittels des ersten Bewegungsschätzers (22) langsame Drehbewegungen unterhalb eines ersten Grenzwertes ausblendet, das Schätzen eines zweiten Drehwinkels (32) des Handgriffs (14) mittels des zweiten Bewegungsschätzers (23) langsame Drehbewegungen unterhalb eines zweiten Grenzwertes berücksichtigt, wobei der zweite Grenzwert geringer als 10% des ersten Grenzwertes ist.

4. Steuerungsverfahren nach einem der vorhergehenden Ansprüche, **dadurch gekennzeichnet, dass** der erste Bewegungsschätzer (22) einen bandbegrenzten Integrator (25) mit einer ersten Grenzfrequenz (w1) und der zweite Bewegungsschätzer (23) einen bandbegrenzten Integrator (31) mit einer zweiten Grenzfrequenz (w2) beinhaltet, wobei die erste Grenzfrequenz (w1) wenigstens zehnmal größer als die zweite Grenzfrequenz (w2) ist.

5. Steuerungsverfahren nach einem der vorhergehenden Ansprüche, dass die erste Auslöseschwelle (A1) geringer als die zweite Auslöseschwelle (A2) ist.

6. Steuerungsverfahren nach Anspruch 5, **dadurch kennzeichnet, dass** die erste Auslöseschwelle (A1) geringer als 50 Grad und die zweite Auslöseschwelle (A2) größer als 90 Grad ist.

## Claims

1. Control method for a machine tool (1) for rotating tools, with the steps:
Continuous rotation of a tool holder (2) by means of a rotary drive (4) about a working axis (5) corresponding to an actuation of a operating button (7),
Detecting of a rotational movement of a handle (14) about the working axis (5) by means of a movement sensor (20),
Assessment of a first rotation angle (28) of the handle (14) by means of a first movement assessor (22), which masks out slow rotational movements which are below a limit,
Assessment of a second rotation angle (32) of the handle (14) by means of a second movement assessor (32), which takes account of slow rotational movements below the limit value,
Activation of a protection measure (19) for reducing the torque output of the rotary drive (4), when the first rotation angle (28) exceeds a first trigger threshold (A1),
Activation of the protection measure (19) for reducing the torque output of the rotary drive (4) when the second rotation angle (33) exceeds a second trigger threshold (A2) and at the same time a power output of the rotary drive (4) exceeds an output threshold (L).

2. Control method according to claim 1, **characterized in that** the limit value lies in the range between 10 degrees/s and 50 degrees/s.

3. Control method according to claim 1 or 2, **characterized in that** the assessment of a first rotation angle (28) of the handle (14) by means of the first movement assessor (22) masks out slow rotational movements below a first limit value, while the assessment of a second rotational angle (32) of the handle (14) by means of the second movement assessor (23) takes account of slow rotational movements below a second limit value, wherein the second limit value is less than 10% of the first limit value.

4. Control method according to any one of the preceding claims, **characterized in that** the first movement assessor (22) contains a band-limited integrator (25) with a first limit frequency (w1) and the second movement assessor (27) contains a band-limited integrator (31) with a second limit frequency (w2), wherein the first limit frequency (w1) is at least ten times greater than the second limit frequency (w2).

5. Control method according to any one of the preceding claims, **characterized in that** the first trigger threshold (A1) is less than the second trigger threshold (A2).

6. Control method according to claim, **characterized in that** the first trigger threshold (A1) is less than 50 degrees and the second trigger threshold (A2) is greater than 90 degrees.

## Revendications

1. Procédé de commande d'une machine-outil (1) pour des outils rotatifs, comportant les étapes consistant à :
faire tourner en continu un porte-outil (2) au moyen d'un mécanisme d'entraînement en rotation (4) autour d'un axe de travail (5) en réponse à un actionnement d'un bouton-poussoir de commande (7),
détecter un mouvement de rotation d'une poignée (14) autour de l'axe de travail (5) au moyen d'un capteur de mouvement (20),
estimer un premier angle de rotation (28) de la poignée (14) au moyen d'un premier estimateur de mouvement (22) qui ignore de mouvements de rotation lents inférieurs à une valeur limite,
estimer un second angle de rotation (32) de la poignée (14) au moyen d'un second estimateur de mouvement (23) qui tient compte des mouvements de rotation lents inférieurs à la valeur limite,
activer une mesure de protection (19) pour réduire le couple de sortie du mécanisme d'entraînement en rotation (4) lorsque le premier angle de rotation (28) franchit un premier seuil de déclenchement (A1),
activer la mesure de protection (19) pour réduire le couple de sortie du mécanisme d'entraînement en rotation (4) lorsque le second angle de rotation (33) franchit un second seuil de déclenchement (A2) et qu'une puissance de sortie du mécanisme d'entraînement en rotation (4) franchit simultanément un seuil de puissance (L) .

2. Procédé de commande selon la revendication 1, **caractérisé en ce que** la valeur limite est dans une plage comprise entre 10 degrés/s et 50 degrés/s.

3. Procédé de commande selon la revendication 1 ou 2, **caractérisé en ce que** l'estimation d'un premier angle de rotation (28) de la poignée (14) au moyen du premier estimateur de mouvement (22) ignore des mouvements de rotation lents inférieurs à une première valeur limite, l'estimation d'un second angle de rotation (32) de la poignée (14) au moyen du second estimateur de mouvement (23) tient compte de mouvements de rotation lents inférieurs à une seconde valeur limite, dans lequel la seconde valeur limite est inférieure à 10 % de la première valeur limite.

4. Procédé de commande selon l'une des revendications précédentes, **caractérisé en ce que** le premier estimateur de mouvement (22) contient un intégrateur à bande limitée (25) ayant une première fréquence limite (w1) et le second estimateur de mouvement (23) contient un intégrateur à bande limitée (31) ayant une seconde fréquence limite (w2), dans lequel la première fréquence limite (w1) est au moins dix fois supérieure à la seconde fréquence limite (w2).

5. Procédé de commande selon l'une des revendications précédentes, **caractérisé en ce que** le premier seuil de déclenchement (A1) est inférieur au second seuil de déclenchement (A2).

6. Procédé de commande selon la revendication 5, **caractérisé en ce que** le premier seuil de déclenchement (A1) est inférieur à 50 degrés et le second seuil de déclenchement (A2) est supérieur à 90 degrés.
